# EUROPÄISCHE PATENTSCHRIFT

(11) **EP 1 763 967 B1**
(45) Veröffentlichungstag und Bekanntmachung des Hinweises auf die Patenterteilung: **03.09.2008**
(21) Anmeldenummer: 05759748.6
(22) Anmeldetag: 01.07.2005
(51) Int. Cl.: H04Q 7/32, H04M 1/60

(54) **VORRICHTUNG ZUR KOMMUNIKATION ÜBER EIN FUNKNETZ**
DEVICE FOR COMMUNICATION VIA A RADIO NETWORK
DISPOSITIF POUR COMMUNIQUER PAR UN RESEAU RADIO

(30) Priorität: 02.07.2004 DE 102004032385
(43) Veröffentlichungstag der Anmeldung: 21.03.2007
(60) Teilanmeldung: 08011001.8
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Otten, Herbert
(86) Internationale Anmeldenummer: PCT/EP2005/007093
(87) Internationale Veröffentlichungsnummer: WO 2006/002938

(56) Entgegenhaltungen:
- WO-A-01/08387
- DE-A1- 10 100 824
- DE-A1- 10 201 612
- DE-A1- 10 215 928
- US-A1- 2003 119 566

## Beschreibung

Die Erfindung betrifft eine Vorrichtung zur Kommunikation über ein Funknetz bzw. ein Adapter zur Integration in ein Fahrzeug.

Aus der Zeitschrift "Auto Zeitung", Ausgabe 25/2003, Seite 74 f. ist ein Fahrzeugfesteinbau der Firma Nokia mit einem GSM-Modul ohne SIM-Karte und Bluetooth-Funktionalität bekannt, welcher über das sogenannte SIM ACCESS PROTOCOLL (SAP) über Funk auf die SIM-Karten-Daten eines SAP- und BT-fähigen Mobiltelefons zugreift und sich mit diesen im Mobilfunknetz einbucht. Ein derartiger Festeinbau ist bezüglich einer Nachrüstung nachteilig, da bis auf Lautsprecher, Mikrofon und Außenantenne sämtliche Alt-Komponenten ausgebaut und sämtliche Neu-Komponenten neu eingebaut werden müssen.

Weiterhin ist aus der US 2003/0119566 A1 eine Freisprecheinrichtung bekannt, welche mit einem Funktionserweiterungsmodul ausgebildet ist. In diese Modul ist die Karte eines Mobiltelefons einsetzbar, so dass der Handapparat der Freisprecheinrichtung eine Fahrzeugtelefonfunktionen übernehmen kann.

Aus der WO 01/08387 A1 ist ein Funktelefon bekannt, welches eine im Fahrzeug angeordnete Basisstation mit einem weitreichenden Sende-Empfänger, eine im Fahrzeug entfern von der Basisstation angeordnete Steuereinheit und eine Nahbereichsnetzwerk zum Aufbau einer Kommunikationsverbindung zwischen der Basisstation und der Steuereinheit umfasst. Die Basisstation kann ein Mobiltelefon umfassen, wobei ein Sende-Empfänger in einem Adapter angeordnet ist, der mit dem Mobiltelefon verbunden ist und wobei der Adapter eine Schale zur Aufnahme und zum Halten des Mobiltelefon s aufweist. Der Sende-Empfänger ist hierdurch ein Zubehörteil, welches dem Nutze als Wahlmöglichkeit zur Verfügung gestellt werden kann.

Aus der DE 101 00 824 A1 ist ein Verfahren zum Einbuchen eines Endgeräts in ein Kommunikationsnetz bekannt, bei dem zwischen einem dem Endgerät zugeordneten Identifizierungsmodul des Nutzers und dem Kommunikationsnetz Berechtigungsdaten übermittelt werden.

Aus der DE 102 01 612 A1 ist eine Anordnung zur Handhabung eines Kommunikationsgeräts bekannt, die zur Kommunikation über ein Funknetz aus einem Fahrzeug eine im Fahrzeug vorgesehene Freisprecheinrichtung mit wenigstens Lautsprecher, Mikrofon und einer vom einem Passagierraum des Fahrzeugs zugänglichen elektromechanischen Schnittstelle umfasst, wobei das Kommunikationsgerät als Mobiltelefon mit wenigstens einer SIM-Karte und einer Funk-Schnittstelle zur drahtlosen Datenübertragung im Nahbereich ausgebildet ist und wobei ein Adapter zur drahtlosen Datenübertragung im Nahbereich geeignet ist und einer elektromechanische Schnittstelle aufweist, wobei die beiden Funk-Schnittstellen zum Datenaustausch zwischen dem Mobiltelefon und Adapter vorgesehen sind, wobei der Adapter als mobile, eigenständig handhabbare und austauschbare Baueinheit ausgebildet ist, welche mit ihrer elektromechanischen Schnittstelle über die universelle elektromechanische Schnittstelle mit dem Fahrzeug, den dortigen fahrzeugseitigen Komponenten der Freisprecheinrichtung und einer Fahrzeugaußenantenne (8) verbindbar ist.

Aufgabe der Erfindung ist es, eine austauschfreundliche Kommunikationsvorrichtung für ein Fahrzeug zur Verfügung zu stellen, mit welcher auch ohne die Verwirklichung eines Antennenkontaktes zwischen dem Mobiltelefon und der Baueinheit, eine Fahrzeugantenne für den Funkverkehr nutzbar ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhaft und zweckmäßige Weiterbildungen angegeben.

Die erfindungsgemäße Vorrichtung zur Kommunikation über ein Funknetz aus einem Fahrzeug nach Anspruch 1 umfasst einen Adapter, welcher wenigstens ein Mobilfunkmodul, insbesondere eine GSM-Modul ohne SIM-Karte mit einer Funk-Schnittstelle zur drahtlosen Datenübermittlung im Nahbereich und eine elektromechanische Schnittstelle aufweist, wobei der Adapter als mobile, eigenständig handhabbare und austauschbare Baueinheit ausgebildet ist, welche mit ihrer elektromechanischen Schnittstelle mit dem Fahrzeug, den dortigen fahrzeugspezifischen Komponenten der Freisprecheinrichtung und einer Fahrzeugaußenantenne über eine zur Vorrichtung gehörende vom Passagierraum des Fahrzeugs zugängliche elektromechanische Schnittstelle verbindbar ist. Da derartige vom Passagierraum des Fahrzeugs zugängliche, elektromechanische Schnittstellen bereits zur Ankupplung von mit Elektronik ausgestatteten Halteschalen für Mobiltelefone Verwendung finden (z.B. beschrieben in der DE 102 01 612 A1 des Anmelders) erlaubt die erfindungsgemäße Vorrichtung eine sekundenschnelle Umrüstung eines Fahrzeugs, das mit einer derartigen Kupplungsschnittstelle ausgestattet ist. Bei der Umrüstung ist einfach die bislang verwendete Halteschale mit Elektronik von der im Passagierraum angeordneten Kupplungsschnittstelle zu lösen und der erfindungsgemäße Adapter auf die Kupplungsschnittstelle aufzusetzen. Im Falle einer späteren Wiederverwendung der alten Halteschale ist der Austausch ebenso schnell und einfach durchführbar.

Der Adapter der erfindungsgemäßen Vorrichtung umfasst eine elektromechanische Schnittstelle und ein GSM-Modul, wobei dem GSM-Modul eine Schnittstelle zur drahtlosen Datenübertragung und/oder ein SIM-Kartenleser zugeordnet sind.

Weitere Einzelheiten der Erfindung werden in der Zeichnung anhand von schematisch dargestellten Ausführungsbeispielen beschrieben.

Hierbei zeigt:
- Figur 1 bis 3:: drei Ausführungsvarianten einer Vorrichtung zum gemeinsamen Betrieb mit einem Mobiltelefon und
- Figur 4 bis 6:: drei Ausführungsvarianten einer Vorrichtung zum Betrieb ohne Mobiltelefon.

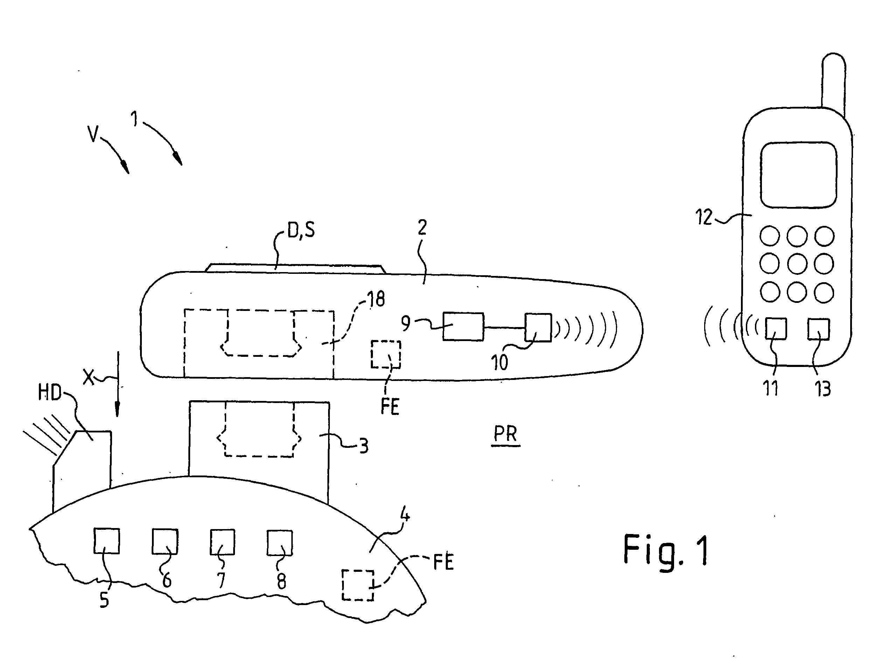

In der Figur 1 ist eine Vorrichtung 1 zur Kommunikation über ein Funknetz dargestellt. Die Vorrichtung 1 besteht im wesentlichen aus eine Baueinheit 2, welche mit einer elektromechanischen Schnittstelle 18 auf einer mechanischen und elektrischen Schnittstelle 3 befestigbar ist. Die Schnittstelle 3 ist auf einer Konsole 4 im Passagierraum PR eines nicht näher dargestellten Fahrzeugs V fest montiert und trägt die Baueinheit 2, wenn diese in eine Pfeilrichtung x auf die Schnittstelle aufgesetzt ist. Im bzw. am Fahrzeug V ist eine Freisprecheinrichtung 5 mit Lautsprecher 6 und Mikrofon 7 und eine Außenantenne 8 angeordnet. Die Baueinheit 2 umfasst ein GSM-Modul 9 und eine Schnittstelle 10 zur drahtlosen Datenübertragung zu einer entsprechenden Schnittstelle 11 eines Mobiltelefons 12. Mit Hilfe der Schnittstelle 11 und 12 erfolgt eine Übertragung der SIM-Daten einer im Mobiltelefon 12 befindlichen SIM-Karte 13 entsprechend eines sogenannten Sim Access Protocolls (SAP). Die Baueinheit 2 kann mit verschiedenen SAP-fähigen Mobiltelefonen und in verschiedenen Fahrzeugen Verwendung finden, sofern eine Freisprecheinrichtung mit einer entsprechenden Schnittstelle zur Verfügung steht. Die Schnittstelle 3 ist als Steckerelement ausgeführt, welches die Baueinheit 2 formschlüssig und/oder kraftschlüssig hält. Eine Freisprechelektronik FE der Freisprecheinrichtung 5 befindet sich fest Am Fahrzeug V und/oder in der Baueinheit 2. Gemäß einer zusätzlich in der Figur 1 dargestellten Ausführungsvariante sind auf der Baueinheit 2 Solarzellen S oder ein Display D mit integrierten Solarzellen angeordnet, um die Baueinheit 2 mit Energie zu versorgen. Weiterhin ist auf der Konsole 4 ein sogenanntes Head-up-Display HD dargestellt, mit welchem Informationen auf eine nicht dargestellte Windschutzscheibe des Fahrzeugs V projiziert werden können, wobei die darzustellenden Informationen von der Baueinheit 2 drahtlos oder drahtgebunden an des Head-up-Display HD übertragen werden.

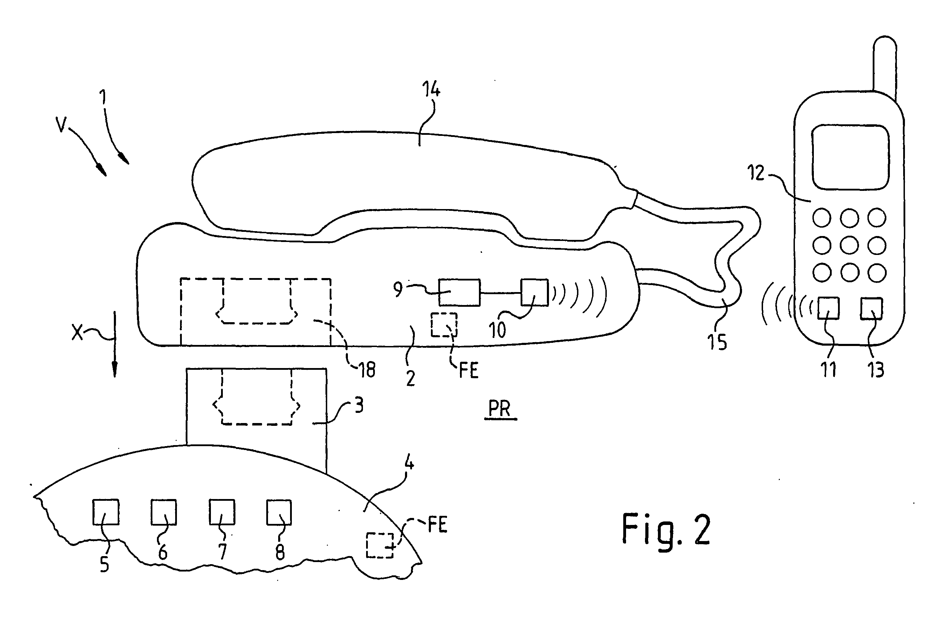

In der Figur 2 ist eine ähnlich zu der in der Figur 1 dargestellten Vorrichtung ausgeführte Vorrichtung 1 gezeigt. Bei dieser Vorrichtung 1 ist die Baueinheit 2 mit einem über ein Kabel 15 angeschlossenen Handapparat 14 ausgestattet. Der Handapparat 14 erlaubt, dass im Fahrzeug Telefonate unter Ausschluss weiterer Insassen geführt werden können. Bezüglich der weiteren Komponenten wird auf die Beschreibung zur Figur 1 verwiesen.

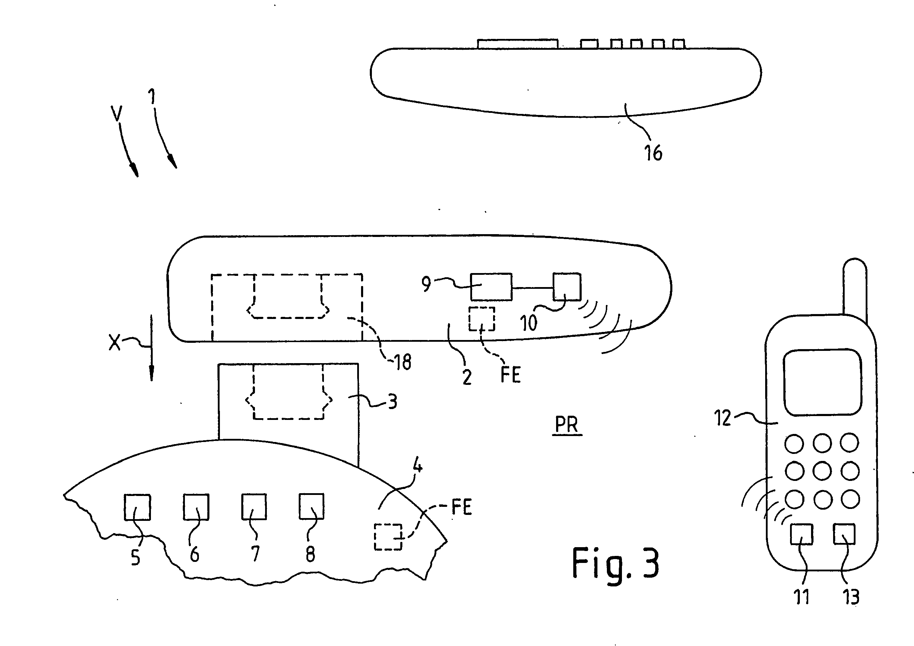

In der Figur 3 ist eine ähnlich zu der in der Figur 1 dargestellten Vorrichtung ausgeführte Vorrichtung 1 gezeigt. Bei dieser Vorrichtung 1 ist die Baueinheit 2 mit einem schnurlosen Handapparat 16 ausgestattet. Zwischen dem Handapparat und der Bauseinheit 2 besteht unabhängig von der Funkverbindung zwischen dem Mobiltelefon 12 und der Baueinheit 2 eine weitere Funkverbindung. Der Handapparat 16 erlaubt, dass im Fahrzeug Telefonate unter Ausschluss weiterer Insassen geführt werden können. Bezüglich der weiteren Komponenten wird auf die Beschreibung zur Figur 1 verwiesen.

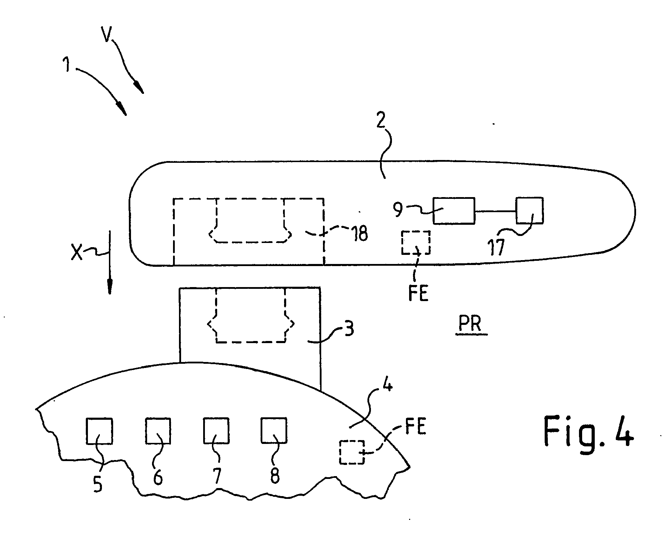

In der Figur 4 ist eine Vorrichtung 1 zur Kommunikation über ein Funknetz dargestellt. Die Vorrichtung 1 besteht im wesentlichen aus eine Baueinheit 2, welche in einem Passagierraum PR eines Fahrzeugs V mit ihrer elektromechanischen Schnittstelle 18 auf einer mechanischen und elektrischen Schnittstelle 3 befestigbar ist. Die Schnittstellen 3 ist auf einer Konsole 4 eines nicht dargestellten Fahrzeugs fest montiert und trägt die Baueinheit 2, wenn diese in eine Pfeilrichtung x auf die Schnittstelle aufgesetzt ist. Im bzw. am Fahrzeug ist eine Freisprecheinrichtung 5 mit Lautsprecher 6 und Mikrofon 7 und eine Außenantenne 8 angeordnet. Die Baueinheit 2 umfasst ein GSM-Modul 9 und einen SIM-Kartenleser 17, in welchen eine nicht dargestellte SIM-Karte einsetzbar ist. Die Baueinheit 2 ist zwischen beliebigen Fahrzeugen, welche eine entsprechende Schnittstelle mit den entsprechenden nachgeschalteten Komponenten aufweisen austauschbar. Die Freisprecheinrichtung 5 umfasst eine Freisprechelektronik FE, welche am Fahrzeug V und/oder in der Baueinheit 2 angeordnet ist.

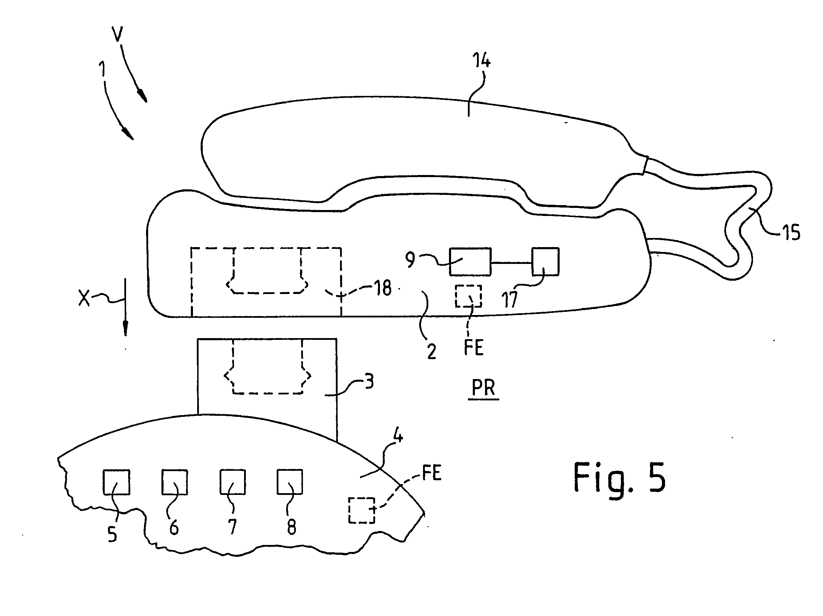

In der Figur 5 ist eine ähnlich zu der in der Figur 4 dargestellten Vorrichtung ausgeführte Vorrichtung 1 gezeigt. Bei dieser Vorrichtung 1 ist die Baueinheit 2 mit einem über ein Kabel 15 angeschlossenen Handapparat 14 ausgestattet. Der Handapparat 14 erlaubt, dass im Fahrzeug Telefonate unter Ausschluss weiterer Insassen geführt werden können. Bezüglich der weiteren Komponenten wird auf die Beschreibung zur Figur 4 verwiesen.

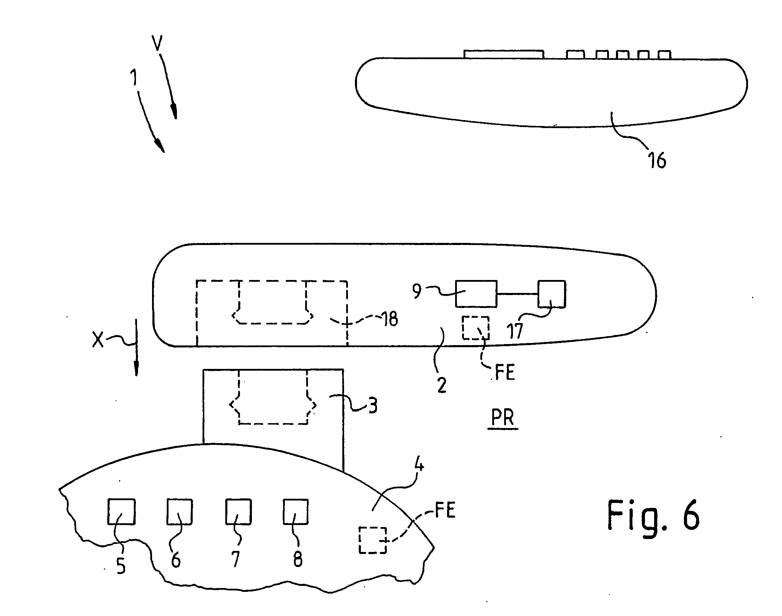

In der Figur 6 ist eine ähnlich zu der in der Figur 4 dargestellten Vorrichtung ausgeführte Vorrichtung 1 gezeigt. Bei dieser Vorrichtung 1 ist die Baueinheit 2 mit einem schnurlosen Handapparat 16 ausgestattet. Zwischen dem Handapparat und der Bauseinheit 2 besteht eine Funkverbindung. Der Handapparat 16 erlaubt, dass im Fahrzeug Telefonate unter Ausschluss weiterer Insassen geführt werden können. Bezüglich der weiteren Komponenten wird auf die Beschreibung zur Figur 4 verwiesen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch die Verwendung von Funkmodulen nach anderen Funkstandards vor. So sind zum Beispiel UMTS-Funkmodule vorgesehen.

### Bezugszeichenliste:

- 1: Vorrichtung
- 2: Baueinheit, Adapter
- 3: elektromechanische Schnittstelle an 4
- 4: Konsole
- 5: Freisprecheinrichtung
- 6: Lautsprecher
- 7: Mikrofon
- 8: Außenantenne
- 9: GSM-Modul
- 10: Schnittstelle zur drahtlosen Datenübertragung
- 11: Schnittstelle zur drahtlosen Datenübertragung
- 12: Mobiltelefon
- 13: SIM-Karte
- 14: schurgebundener Handapparat
- 15: Kabel
- 16: schnurloser Handapparat
- 17: SIM-Kartenleser
- 18: elektromechanische Schnittstelle von 2
- x: Pfeilrichtung
- D: Display
- FE: Freisprechelektronik
- HD: Head-up-Display
- PR: Passagierraum
- S: Solarzellen
- V: Fahrzeug

## Patentansprüche

1. Vorrichtung (1) zur Kommunikation über ein Funknetz aus einem Fahrzeug (V), welche wenigstens die folgenden drei baulich getrennten Komponenten umfasst,
- eine im Fahrzeug vorgesehene Freisprecheinrichtung (5) mit wenigstens Lautsprecher (6), Mikrofon (7) und einer vom einem Passagierraum (PR) des Fahrzeugs (V) zugänglichen elektromechanischen Schnittstelle (3),
- ein Mobiltelefon (12) mit wenigstens einer SIM-Karte (13) und einer Funk-Schnittstelle (11) zur drahtlosen Datenübertragung im Nahbereich,
- einen Adapter (2) mit einer Funk-Schnittstelle (10) zur drahtlosen Datenübertragung im Nahbereich und einer elektromechanischen Schnittstelle (18,
- wobei die beiden Funk-Schnittstellen (10, 11) zum Datenaustausch vorgesehen sind,
- wobei der Adapter (2) als mobile, eigenständig handhabbare und austauschbare Baueinheit (2) ausgebildet ist, welche mit ihrer elektromechanischen Schnittstelle (18) über die universelle elektromechanische Schnittstelle (3) mit dem Fahrzeug (V), den dortigen fahrzeugseitigen Komponenten (6, 7) der Freisprecheinrichtung (5) und einer Fahrzeugaußenantenne (8) verbindbar ist,
- **dadurch gekennzeichnet, dass** der Adapter ein GSM-Modul ohne SIM-Karte aufweist, wobei die beiden Funk-Schnittstellen (10, 11) zum Datenaustausch zwischen dem Mobiltelefon (12) und dem GSM-Modul (9) vorgesehen sind.

2. Vorrichtung nach Anspruch 1, **dadurch gekennzeichnet, dass** an die Baueinheit (2) ein schnurgebundener Handapparat (14) anschließbar ist.

3. Vorrichtung nach einem der vorhergehenden Ansprüche, **dadurch gekennzeichnet, dass** an die Baueinheit (2) ein schnurloser Handapparat (16) anschließbar ist.

4. Vorrichtung nach einem der vorhergehenden Ansprüche, **dadurch gekennzeichnet, dass** die Baueinheit (2) durch die mechanische Schnittstelle (3) ohne weitere Abstützung tragbar ist.

5. Vorrichtung nach einem der vorhergehenden Ansprüche, **dadurch gekennzeichnet, dass** die Baueinheit (2) elektronische Komponenten zur Anpassung des GSM-Moduls (9) auf die Freisprecheinrichtung (5) umfasst.

6. Vorrichtung nach einem der Ansprüche 1 bis 3, **dadurch gekennzeichnet, dass** die Baueinheit (2) elektronische Komponenten zur Anpassung des GSM-Moduls (9) auf das Mobiltelefon (12) umfasst.

7. Vorrichtung nach einem der vorhergehenden Ansprüche, **dadurch gekennzeichnet, dass** die Baueinheit (2) wenigstens eine Anzeigevorrichtung umfasst.

8. Vorrichtung nach einem der vorhergehenden Ansprüche, **dadurch gekennzeichnet, dass** die Baueinheit (2) wenigstens einen Schalter umfasst.

9. Vorrichtung nach einem der vorhergehenden Ansprüche, **dadurch gekennzeichnet, dass** die Baueinheit (2) wenigstens einen Taster umfasst.

10. Vorrichtung nach einem der vorhergehenden Ansprüche, **dadurch gekennzeichnet, dass** die in der Baueinheit (2) angeordnete Schnittstelle (10) zur drahtlosen Datenübertragung im Nahbereich zur Kommunikation über unterschiedliche Funkstandards vorgesehen ist.

11. Vorrichtung nach einem der vorhergehenden Ansprüche, **dadurch gekennzeichnet, dass** mehrere Mobiltelefone (12) mittels der Baueinheit (2) im Fahrzeug betreibbar sind.

12. Vorrichtung nach einem der vorhergehenden Ansprüche, **dadurch gekennzeichnet, dass** weitere elektronische Geräte, wie z.B. Laptop und PDA mittels der Schnittstelle (10) der Baueinheit (2) an der Freisprecheinrichtung (5) betreibbar sind.

13. Vorrichtung nach einem der vorhergehenden Ansprüche, **dadurch gekennzeichnet, dass** die Freisprecheinrichtung (5) als Multimediaeinrichtung ausgebildet ist und insbesondere Mittel zur visuellen Darstellung umfasst.

14. Vorrichtung nach einem der vorhergehenden Ansprüche, **dadurch gekennzeichnet, dass** die Freisprecheinrichtung (5) eine Freisprechelektronik (FE) umfasst, welche in der Baueinheit (2) angeordnet ist und/oder fest im Fahrzeug (V) eingebaut ist.

15. Vorrichtung nach einem der vorhergehenden Ansprüche, **dadurch gekennzeichnet, dass** die Baueinheit (2) durch elektrische Energie erzeugende Solarzellen (S) betreibbar ist, welche insbesondere auf der Baueinheit (2) angeordnet sind.

16. Vorrichtung nach einem der vorhergehenden Ansprüche, **dadurch gekennzeichnet, dass** die Baueinheit (2) durch ein Display (D), welches insbesondere Energie erzeugende Solarzellen umfasst, betreibbar ist, welches insbesondere auf der Baueinheit (2) angeordnet ist.

17. Vorrichtung nach einem der vorhergehenden Ansprüche, **dadurch gekennzeichnet, dass** von der Baueinheit (2) drahtgebunden oder drahtlos Anzeigeinformationen an ein Display, insbesondere ein Head-up-Display (HD) übermittelbar sind.

18. Vorrichtung nach einem der vorhergehenden Ansprüche, **dadurch gekennzeichnet, dass** die Baueinheit (2) der Vorrichtung (1) unabhängig von dem Fahrzeug (V) mit einer Vielzahl von Mobiltelefonen und einer Vielzahl von Fahrzeugen mit wenigstens einer eingebauten Komponenten (5, 6, 7) der Freisprecheinrichtung (5) betreibbar ist.

19. Vorritung nach einem der vorhergehenden Ansprüche, **dadurch gekennzeichnet, dass** dem GSM-Modul (9) ein SIM-Kartenleser (17) zugeordnet sind.

20. Vorrichtung nach Anspruch 19, **dadurch gekennzeichnet, dass** in den Adapter (2) eine Freisprechelektronik (FE) oder Teile einer Freisprechelektronik (FE) integriert sind.

## Claims

1. Device (1) for communication via a radio network from a vehicle (V), which comprises at least the following three structurally separate components, - a hands-free device (5) provided in the vehicle with at least a loudspeaker (6), microphone (7) and electromechanical interface (3) accessible from a passenger area (PR) of the vehicle (V), - a mobile phone (12) with at least one SIM card (13) and a radio interface (11) for wireless data transmission in close range, - an adapter (2) with a radio interface (10) for wireless data transmission in close range and an electromechanical interface (18), - wherein the two radio interfaces (10, 11) are provided for data exchange, - whereby the adapter (2) is designed as a mobile, independently operable and exchangeable component (2), which with its electromechanical interface (18) can be connected via the universal electromechanical interface (3) with the vehicle (V), the vehicle-side components (6, 7) of the hands-free device (5) and an external aerial of the vehicle (8), - **characterised in that** the adapter comprises a GSM module without a SIM card, wherein the two radio interfaces (10, 11) are provided for data exchange between the mobile phone (12) and the GSM module (9).

2. Device according to claim 1, **characterised in that** a cable-bound hand apparatus (14) can be connected to the unit (2).

3. Device according to any one of the preceding claims, **characterised in that** a cable-free hand apparatus (16) can be connected to the unit (2).

4. Device according to any one of the preceding claims, **characterised in that** the unit (2) can be supported by the mechanical interface (3) without further support.

5. Device according to any one of the preceding claims, **characterised in that** the unit (2) comprises electronic components for adjusting the GSM module (9) to the hands-free device (5).

6. Device according to any one of claims 1 to 3, **characterised in that** the unit (2) comprises electronic components for adjusting the GSM module (9) to the mobile phone (12).

7. Device according to any one of the preceding claims, **characterised in that** the unit (2) comprises at least one display device.

8. Device according to any one of the preceding claims, **characterised in that** the unit (2) comprises at least one switch.

9. Device according to any one of the preceding claims, **characterised in that** the unit (2) comprises at least one button.

10. Device according to any one of the preceding claims, **characterised in that** the interface (10) arranged in the unit (2) for wireless data transmission is provided in close range for communication via various different radio standards.

11. Device according to any one of the preceding claims, **characterised in that** several mobile phones (12) can be operated by means of the unit (2) in the vehicle.

12. Device according to any one of the preceding claims, **characterised in that** additional electronic devices, such as e.g. laptops and PDAs can be operated by means of the interface (10) of the unit (2) on the hands-free device (5).

13. Device according to any one of the preceding claims, **characterised in that** the hands-free device (5) is designed as a multimedia device and in particular comprises means for visual representation.

14. Device according to any one of the preceding claims, **characterised in that** the hands-free device (5) comprises a hands-free electronic device (FE), which is arranged in the unit (2) and/or is installed securely in the vehicle (V).

15. Device according to any one of the preceding claims, **characterised in that** the unit (2) can be operated by solar cells (S) generating electrical energy which are arranged in particular on the unit (2).

16. Device according to any one of the preceding claims, **characterised in that** the unit (2) can be operated by a display (D), which comprises in particular solar cells generating energy, which is arranged in particular on the unit (2).

17. Device according to any one of the preceding claims, **characterised in that** from the unit (2) cable-bound or cable-free display information can be transmitted to a display, in particular a head-up display (HD).

18. Device according to any one of the preceding claims, **characterised in** the unit (2) of the device (1) can be operated independently of the vehicle (V) by a plurality of mobile phones and a plurality of vehicles with at least one built-in component (5, 6, 7) of the hands-free device (5).

19. Device according to any one of the preceding claims, **characterised in** a SIM card reader (17) is assigned to the GSM module (9).

20. Device according to claim 19, **characterised in that** a hands-free electronic device (FE) or parts of a hands-free electronic device (FE) are integrated into the adapter (2).

## Revendications

1. Dispositif (1) pour communiquer par un réseau radio à partir d'un véhicule (V) et ayant au moins les trois composants séparés du point de vue de la construction
- une installation de communication mains libres (5) dans le véhicule ayant au moins un haut-parleur (6), un micro (7) et une interface (3) électromécanique accessible à partir de l'habitacle (PR) du véhicule (V),
- un téléphone mobile (12) avec au moins une carte SIM (13) et une interface radio (11) pour la transmission des données par une liaison sans fil dans le domaine proche,
- adaptateur (2) avec une interface radio (10) pour la transmission de données sans fil dans le domaine proche et une interface électromécanique (18),
- les deux interfaces radio (10, 11) étant prévues pour échanger les données,
- l'adaptateur (2) est une unité (2), manipulable indépendamment et échangeable, et qui peut être reliée par son interface électromécanique (18), par l'interface électromécanique universelle (3) avec le véhicule (V), les composants (6, 7) côté véhicule de l'installation mains libres (5) et une antenne e térieure (8) du véhicule,
**caractérisé en ce que**
l'adaptateur comporte un module GSM sans carte SIM, les deu interfaces radio (10, 11) étant prévues pour l'échange des données entre le téléphone mobile (12) et le module GSM (9).

2. Dispositif selon la revendication 1,
**caractérisé en ce qu'**
un appareil à main (14) lié à un fil peut être raccordé à l'unité (2).

3. Dispositif selon l'une des revendications précédentes,
**caractérisé en ce qu'**
un appareil à main (16) sans fil peut être relié à l'unité (2).

4. Dispositif selon l'une des revendications précédentes,
**caractérisé en ce que**
l'unité (2) peut être portée sans autre appui par l'interface mécanique (3).

5. Dispositif selon l'une des revendications précédentes,
**caractérisé en ce que**
l'unité (2) comporte des composants électroniques pour l'adaptation du module GSM (9) à l'installation mains libres (5).

6. Dispositif selon l'une des revendications 1 à 3,
**caractérisé en ce que**
l'unité (2) comporte des composants électroniques pour adapter le module GSM (9) au téléphone mobile (12).

7. Dispositif selon l'une des revendications précédentes,
**caractérisé en ce que**
l'unité (2) comporte au moins un dispositif d'affichage.

8. Dispositif selon l'une des revendications précédentes,
**caractérisé en ce que**
l'unité (2) comporte au moins un commutateur.

9. Dispositif selon l'une des revendications précédentes,
**caractérisé en ce que**
l'unité (2) comporte au moins une touche.

10. Dispositif selon l'une des revendications précédentes,
**caractérisé en ce que**
l'interface (10) de l'unité (2) est prévue pour la transmission de données par une liaison sans fil dans le domaine proche, pour communiquer par des standards radio différents.

11. Dispositif selon l'une des revendications précédentes,
**caractérisé en ce que**
plusieurs téléphones mobiles (12) peuvent fonctionner dans le véhicule à l'aide de l'unité (2).

12. Dispositif selon l'une des revendications précédentes,
**caractérisé en ce que**
d'autres appareil électroniques tels que par exemple des ordinateurs portables Laptop et PDA peuvent fonctionner par l'interface (10) de l'unité (2) avec l'installation mains libres (5).

13. Dispositif selon l'une des revendications précédentes,
**caractérisé en ce que**
l'installation mains libres (5) est une installation multimédias et comprend notamment des moyens pour la représentation visuelle.

14. Dispositif selon l'une des revendications précédentes,
**caractérisé en ce que**
l'installation mains libres (5) comprend une électronique mains libres (FE) dans l'unité (2) et/ou installée à demeure dans le véhicule (V).

15. Dispositif selon l'une des revendications précédentes,
**caractérisé en ce que**
l'unité (2) est alimentée par l'énergie électrique fournie par des cellules solaires (S) installées notamment sur l'unité (2).

16. Dispositif selon l'une des revendications précédentes,
**caractérisé en ce que**
l'unité (2) fonctionne avec un afficheur (D) comprenant notamment des cellules solaires générant l'énergie, cet afficheur étant installé notamment sur l'unité (2).

17. Dispositif selon l'une des revendications précédentes,
**caractérisé en ce que**
des informations d'affichage sont transmises par l'unité (2) par une liaison avec fil ou sans fil à un afficheur, notamment un afficheur frontal (HD).

18. Dispositif selon l'une des revendications précédentes,
**caractérisé en ce que**
l'unité (2) du dispositif (1) peut fonctionner indépendamment du véhicule (V) avec de multiples téléphones mobiles et de plusieurs véhicules avec au moins un composant installé de manière fixe (5, 6, 7) de l'installation de mains libres (5).

19. Dispositif selon l'une des revendications précédentes,
**caractérisé en ce que**
le module GSM (9) comporte un lecteur de carte SIM (17).

20. Dispositif selon la revendication 19,
**caractérisé en ce qu'**
une électronique mains libres (FE) ou des parties d'une électronique mains libres (FE) sont intégrées dans l'adaptateur (2).
